# EUROPEAN PATENT SPECIFICATION

(11) **EP 2 117 109 B1**
(45) Date of publication and mention of the grant of the patent: **15.08.2012**
(21) Application number: 08857955.2
(22) Date of filing: 04.12.2008
(51) Int. Cl.: H02P 6/20, H02P 6/18

(54) **AC CONVERTER-FED MOTOR**
ÜBER AC-WANDLER GESPEISTER MOTOR
MOTEUR ÉLECTRIQUE À COURANT ALTERNATIF

(30) Priority: 04.12.2007 RU 2007145461
(43) Date of publication of application: 11.11.2009
(73) Proprietor: Buglaev, Oleg Anatolievich, St.Petersburg 197908 (RU)
(72) Inventor: BRYZGALOV, Viktor Alexeevich, St.Petersburg 192284 (RU)
(74) Representative: Gulde Hengelhaupt Ziebig & Schneider
(86) International application number: PCT/RU2008/000742
(87) International publication number: WO 2009/072930

(56) References cited:
- WO-A1-98/56104
- WO-A1-2006/073378
- GB-A- 2 230 908
- JP-A- 2005 218 160
- RU-C1- 2 084 948
- RU-C1- 2 091 978
- SU-A1- 1 387 121
- US-A1- 2004 004 455
- US-A1- 2004 056 628

## Description

### Technical field

The invention relates to electrical engineering and can be used, in particular, in electric drives of mechanisms used in dental equipment.

### Background art

A known controlled brushless AC electric motor comprises an electromechanical converter with a permanent-magnet inductor, the 1^{st} terminals of the three sections of the armature winding of said inductor being joined together and connected to the common bus of the brushless AC electric motor, a full-wave frequency converter, the outputs of said converter being connected to the 2^{nd} terminals of the armature winding sections, a logical control unit, the outputs of said control unit being connected to the control inputs of the full-wave frequency converter, and three comparators, each having two inputs, the outputs of said comparators being respectively connected to the inputs of the logical control unit. The brushless AC electric motor also comprises three integrating circuits. The 1^{st} input of the *i-th* comparator is connected to the 2^{nd} terminal of the *i-th* section of armature winding, while the output of said comparator is connected to the input of the *(i-1)*th integrating circuit. The output of the *(i-1)*th integrating circuit is connected to the 2^{nd} input of the *i-th* comparator, wherein the abovementioned connection between the comparators and the integrating circuits forms a ring coupling, SU 1774455 A1.

The disadvantage of said brushless AC electric motor consists in that there is a shift at the outputs of the integrating circuits relative to the common terminal when the motor operates in the mode of rotation frequency stabilization, which results in different switching thresholds of the rotational-EMF comparators and, consequently, in different lead angles at which the sections are powered during positive and negative intervals of the rotational EMF. Nonsymmetric voltage shapes at the armature winding sections result in additional torque pulsations, increased detonation and, consequently, deterioration of operating qualities of the brushless AC electric motor.

The brushless AC electric motor according to RU 2091978 C1 improves the operating qualities of the motor, in particular, it increases its service life by reducing the torque pulsations.

This electric motor comprises an electromechanical converter with a winding, which consists of three sections, and a permanent magnet inductor. The terminals of the winding sections are joined together and connected to the common bus. The device also comprises a voltage inverter, a control unit based on the "OR" and "AND" logical elements, and three comparators; start-up of the electric motor is done by means of integrating circuits; the inverter is a three-phase bridge based on transistors. Terminals of the electromechanical converter windings are connected to corresponding outputs of the inverter and to the inputs of the 1^{st}, 2^{nd} and 3^{rd} comparators, respectively, and the electric motor is connected to a bipolar power source, RU 2091978 C1.

This engineering solution has been taken as a prototype of the present invention.

The control unit of the prototype device is based on logical elements, which are electrically connected with the inverter elements. Said logical elements have a relatively small range of acceptable fluctuations of the voltage that is supplied to the power input of the inverter. If this range is exceeded, for example, because of a defect in the power supply device, the voltage suppressors or the inverter itself, then the logical unit will break down.

It should also be mentioned that high power currents of the electromechanical converter winding have a negative effect on the control unit through the inverter, which leads to unstable operation of the electric motor (emergency operation mode).

The abovementioned disadvantages become even more pronounced upon increase of required capacity of the brushless AC electric motor, which narrows the list of possible applications of the prototype device, limiting it to low-load electric drives, for example, drives of magnetic tape-driving mechanisms of tape recorders.

Another serious disadvantage of the prototype consists in the fact that special integrating circuits are used for starting the electric motor. The inevitable dispersion of parameters of said circuits produces a certain shift at their outputs relative to the common terminal in the mode of rotation frequency stabilization, which creates additional torque pulsations of the electric motor. The prototype device does not provide a satisfactory solution for reducing said pulsations (due to the abovementioned dispersion of parameters of the integrating circuits), although pulsations in RU 2091978 C1 are somewhat smaller than in SU 1774455 A1. Control circuits for the smooth start-up of brushlers DC motors without position sensors are described, for example, in documents JP 2005218160, WO2006/073378 and US 2004/004455.

### Summary of the invention

It is an object of this invention to provide a solution for increasing the stability and reliability of operation of the brushless AC electric motor, and for reducing the torque pulsations of the electric motor.

According to the invention, as set forth in claim 1, there is provided a brushless AC electric motor, which is connected to a power source and comprises an electromechanical converter with a three-section winding and a permanent-magnet inductor, an inverter, a control unit and three comparators (1^{st}, 2^{nd} and 3^{rd}), wherein the terminals of the winding sections of said electromechanical converter are connected to the 1^{st}, 2^{nd} and 3^{rd} outputs of the inverter, respectively, and to the 1^{st} inputs of the 1^{st}, 2^{nd} and 3^{rd} comparators, respectively, said motor additionally comprising an electric motor start-up unit; and wherein said control unit comprises six optron transmitters with optical outputs, while the inverter comprises six optron receivers, the optical inputs of said receivers being connected by means of optical coupling to corresponding optical outputs of said optron transmitters of the control unit, and wherein the outputs of the 1^{st}, 2^{nd} and 3^{rd} comparators are connected to the 1^{st}, 2^{nd} and 3^{rd} inputs of the control unit, respectively, while the 7^{th} power input of the inverter is connected to the power source and to the input of the electric motor start-up unit, the 1^{st} output of said start-up unit being connected to the 3^{rd} input of the 2^{nd} comparator, its 2^{nd} output being connected to the 3^{rd} input of the 3^{rd} comparator, and wherein the 2^{nd} inputs of all comparators are interconnected with each other, whereby the start-up unit comprises a bipolar transistor, a capacitor and a diode, and the 1^{st} output of the start-up unit becomes disconnected from the comparator because of the locked diode, and a starting pulse is formed at the 2^{nd} output of the start-up unit by means of the transistor and capacitor.

The applicant hasn't found any sources of information containing data on engineering solutions identical to the present invention. In applicant's opinion, this enables to conclude that the invention conforms to the criterion "Novelty" (N).

The novel features of the present invention provide the device with new properties, which are very important for the practical application of said device. Electric connection between the inverter and the control unit is prevented due to the fact that the control unit comprises optron transmitters, and the inverter comprises optron receivers, the optical inputs of said receivers being optically coupled to the outputs of said optron transmitters, thus forming an optron pair with said optron transmitters. Therefore, fluctuations of the supply voltage, defects of the power source or the inverter itself cannot damage the control unit; furthermore, high power currents of the electromechanical converter winding cannot influence the control unit through the inverter, which significantly increases stability of the electric motor operation and virtually prevents the occurrence of emergency operating mode; therefore, it becomes possible to significantly increase the capacity of the electric motor, in particular, towards values required for application of the motor in electric drives of dental equipment mechanisms.

Finally, the existence of the electric motor start-up unit makes it possible to exclude from the process the integrating circuits, which inevitably possess different inherent parameters and cause additional torque pulsations in the prototype; reduction of said pulsations significantly improves the operational qualities of the electric motor.

In applicant's opinion, the abovementioned facts enable to conclude that the present invention conforms to the criterion "Inventive Step" (IS).

### Brief description of the drawings

The invention is further explained, by way of example, with reference to the following drawings, in which:

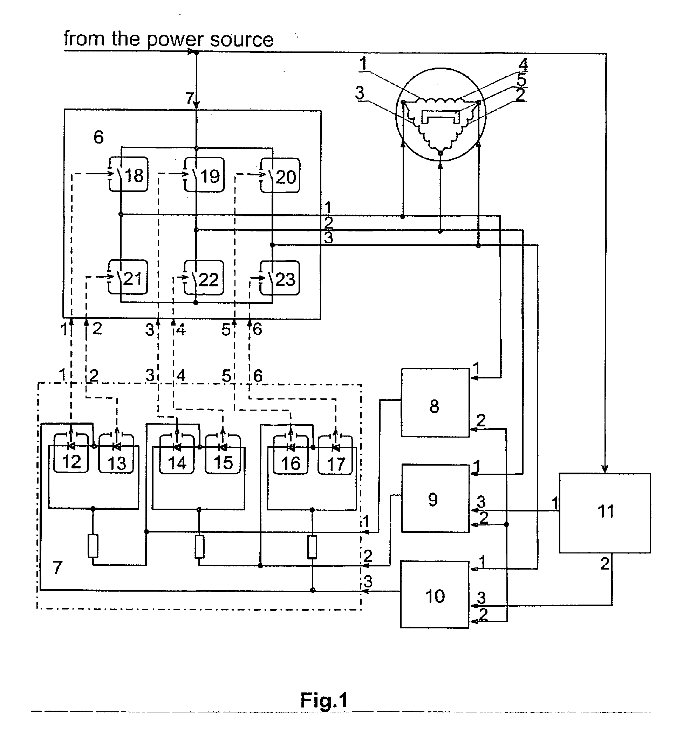

Figure 1 is a diagram of the device;
Figure 2 is a schematic diagram of the electric motor start-up unit.

### Detailed description of the illustrated embodiment

The brushless AC electric motor is connected to a power source, in particular, to a controlled switching regulator (not shown in the figure), and comprises an electromechanical converter 1 with a three-section winding (sections 2, 3 and 4). In this particular embodiment the sections are interconnected in a triangle-like circuit; however, they can also be interconnected in a star-like circuit. Inductor 5 is based on permanent magnets. The inventive device also comprises an inverter 6, a control unit 7, 1^{st} comparator 8, 2^{nd} comparator 9 and 3^{rd} comparator 10; the terminals of sections of the electromechanical converter winding are connected to the 1^{st}, 2^{nd} and 3^{rd} outputs of the inverter 6, respectively, as well as with the 1^{st} inputs of the 1^{st} comparator 8, 2^{nd} comparator 9 and 3^{rd} comparator 10, respectively; the inventive device also comprises an electric motor start-up unit 11. Said control unit 7 comprises six optron transmitters 12, 13, 14, 15, 16 and 17 with optical outputs, while the inverter 6 comprises six optron receivers 18, 19, 20, 21, 22 and 23 with switches, the optical inputs of said optron receivers being optically coupled with corresponding optical outputs of said optron transmitters 12, 13, 14, 15, 16 and 17 of the control unit 7. Said optron transmitters and optron receivers form optron pairs (optrons) interconnected with each other by means of optical coupling. This particular embodiment uses optrons produced by COSMO company (K1010D) and field transistors IRL024N, which act as controlled switches of the inverter 6. The electric motor start-up unit 11 consists of an operational amplifier 24 (microcircuit LM324N), a bipolar transistor 25 (BC327-40), diodes 26 and 27 (1N4148), and a ceramic capacitor 28 (MDR104ZA, 0,1mF 100V Y5V). The operational amplifier 24 and diode 26 form a Schmitt trigger with a given hysteresis curve, with trigger voltage of 1 V and dropout voltage of 0,1 V. The outputs of the 1^{st} comparator 8, 2^{nd} comparator 9 and 3^{rd} comparator 10 are connected to the 1^{st}, 2^{nd} and 3^{rd} inputs of the control unit 7, respectively, while the 7^{th} power input of the inverter 6 is connected to the power source and to the input of the electric motor start-up unit 11, the 1^{st} output of said start-up unit 11 being connected to the 3^{rd} input of the 2^{nd} comparator 9 and its 2^{nd} output being connected to the 3^{rd} input of the 3^{rd} comparator 10, and wherein the 2^{nd} inputs of all comparators are interconnected.

The device operates in the following way. When the brushless AC electric motor is turned off, voltage from the power source equals 0. This means that zero voltage is supplied to the input of the start-up unit 11 (the inverting input of the Schmitt trigger) from the power source; voltage from the output of the Schmitt trigger is supplied in the form of a 'logical high' through diode 27 and then through the 1^{st} output of the start-up unit 11 to the 2^{nd} input of the 2^{nd} comparator 9; forced initial logical combination of 1.0.1 is generated at the three (1.2.3) inputs of the control unit 7, said optron transmitters 17 and 14 and corresponding optron receivers 19 and 23 being activated at this time; section 2 of the electromechanical converter winding is connected to the power source through the switches of the optron receivers 19 and 23. When the electric motor is turned on, the voltage of the power source begins to grow from zero to the specified value. When the voltage value is below the specified triggering threshold of the start-up unit 11, i.e. below 1 V, then the value of current (I inv) consumed by the inverter 6 from the power source can be calculated by the following formula:
1) I inv=3E inv/2Rsect (for sections 2, 3 and 4 interconnected in a triangle-like circuit)
2) I inv=E inv/2Rsect (for sections 2, 3 and 4 interconnected in a star-like circuit),
where: E inv is the supply voltage of the inverter,

Rsect is the resistance of one section of the electric motor winding.

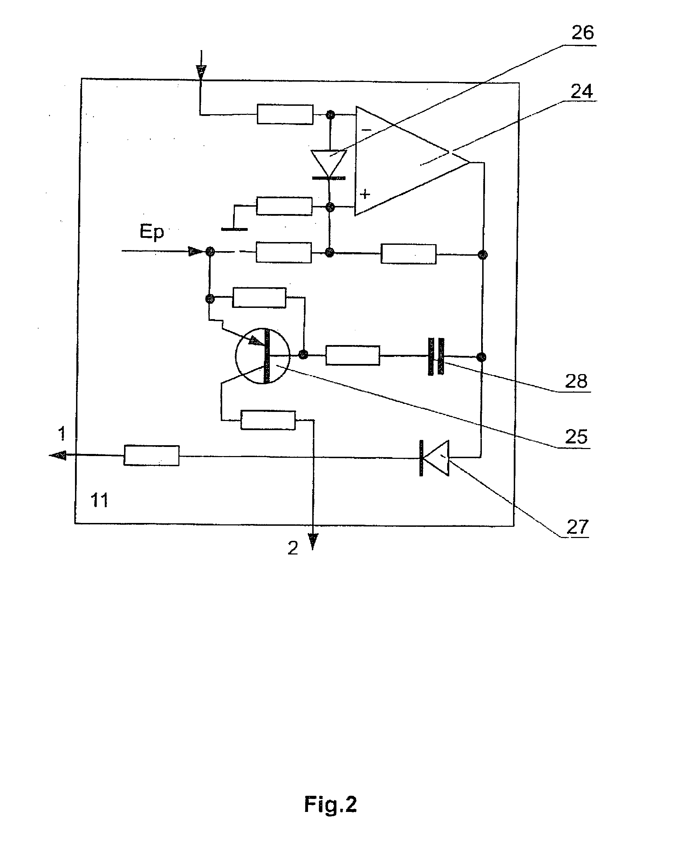

At the initial point of the electric motor start-up, when the growing voltage of the power supply source has not reached the triggering threshold of the unit 11 yet, the inductor 5 sets into a rigidly defined angular position due to the influence of the increasing magnetic field of windings 2, 3 and 4. When the supply voltage of the inverter 6 reaches the triggering voltage value of the unit 11, its 1^{st} output becomes disconnected from the comparator 9 because of the locked diode 27, and a starting pulse is formed at its 2^{nd} output by means of the bipolar transistor 25 and capacitor 28 (Figure 2); at this moment the electric motor is started and then, when the starting pulse is over, the unit 11 becomes disconnected from the comparator 10 because of the locked transistor 25; the electric motor enters the self-synchronization mode due to the back EMF, which is induced in the electric motor windings upon rotation of the inductor 5 and is detected from its three-phase winding by means of the three comparators 8, 9 and 10. When the inputs 1.2.3. of the unit 7 transmit the forced initial logical combination of 1.0.1. and the growing voltage of the power supply source has not reached the triggering threshold of the unit 11 yet, the back EMF, which is induced in the electric motor windings due to the rotation of the inductor 5, is not accepted by the comparators 8, 9 and 10. After the starting pulse the forced initial logical combination of 1.0.1 at the three inputs 1.2.3 of the unit 7 is replaced with the forced starting logical combination 1.0.0; optron transmitters (OT) 14 and 13, as well as corresponding optron receivers (OR) 19 and 21, become activated; also the section 3 of the electromechanical converter winding becomes connected to the power supply source instead of section 2 and, as a result, the magnetic field vector turns by 60 degrees, and the inductor 5 accelerates to occupy a new angular position; because of this, back EMF is induced at the windings of the electric motor. When the starting pulse is over, the comparators 8, 9 and 10 begin to accept the back EMF, whereupon the electric motor switches to the self-synchronization mode. Now the electric motor can be controlled: the torque at its shaft is proportional to the value of current in its windings, while the rotation speed of the inductor 5 is proportional to the value of voltage of the power supply source. The optron transmitters 12, 13, 14, 15, 16 and 17 are electrically interconnected in such a way that they provide an optical isolation for the inverter 6 and also act as an optron decoder, which uses the inverter 6 to implement the algorithm of 120-degree commutation of voltages of the three-phase load - the windings of the electromechanical converter 1. In this 120-degree commutation only two phases are connected to the power supply source at any given moment, while the 3^{rd} phase is used to measure the back EMF. In the self-synchronization mode, the comparators 8, 9 and 10 successively generate 6 code sequences at the three inputs 1.2.3 of the control unit 7 per one rotation of the inductor 5:
1) (1.0.1) - the OT(17.14) and OR(23.19) are activated, section 2 becomes ON
2) (1.0.0) - the OT(14.13) and OR(19.21) are activated, section 3 becomes ON
3) (1.1.0) - the OT(13.16) and OR(21.20) are activated, section 4 becomes ON
4) (0.1.0) - the OT(16.15) and OR(20.22) are activated, section 2 becomes ON
5) (0.1.1) - the OT(15.12) and OR(22.18) are activated, section 3 becomes ON
6) (0.0.1) - the OT(12.17) and OR(18.23) are activated, section 4 becomes ON.

The 1^{st} and 2^{nd} code combinations are used for starting the electric motor. In general, any two adjacent code combinations can be used for starting the electric motor. The 3^{rd}, 4^{th}, 5^{th} and 6^{th} code combinations are used for automatic generation of three-phase voltage at the electric motor windings during its operation under self-synchronization conditions.

### Industrial applicability

The present invention uses simple means to significantly increase the reliability and stability of operation of the brushless AC electric motor, and reduce the torque pulsations.

In applicant's opinion, this enables to conclude that the invention conforms to the criterion "Industrial Applicability" (IA).

## Claims

1. A brushless AC electric motor that is connected to a power source and comprises an electromechanical converter (1) with a three-section winding (2, 3, 4) and a permanent-magnet inductor, an inverter (6), a control unit (7) and three comparators (8, 9, 10), wherein the terminals of the winding sections of said electromechanical converter are connected to the 1^{st}, 2^{nd} and 3^{rd} outputs of the inverter (6), respectively, and to the 1^{st} inputs of the comparators (8, 9, 10), respectively,
**characterized in that**
said motor additionally comprises an electric motor start-up unit (11), wherein said control unit comprises six optron transmitters (12, 13, 14, 15, 16, 17) with optical outputs, while the inverter comprises six optron receivers (18, 19, 20, 21, 22, 23), the optical inputs of said receivers being connected by means of optical coupling to corresponding optical outputs of said optron transmitters (12, 13, 14, 15, 16, 17) of the control unit (7), and wherein the outputs of the comparators (8, 9, 10) are connected to the 1^{st}, 2^{nd} and 3^{rd} inputs of the control unit (7), respectively, while the 7^{th} power input of the inverter (6) is connected to the power supply source and to the input of the electric motor start-up unit (11), the 1^{st} output of said start-up unit (11) being connected to the 3^{rd} input of the comparator (9), its 2^{nd} output being connected to the 3^{rd} input of the comparator (10), and wherein the 2^{nd} inputs of all comparators (8, 9, 10) are interconnected with each other,
whereby the start-up unit (11) comprises a bipolar transistor(25), a capacitor (28) and a diode (27), and the 1^{st} output of the start-up unit (11) becomes disconnected from the comparator (9) because of the locked diode (27), and a starting pulse is formed at the 2^{nd} output of the start-up unit (11) by means of the transistor (25) and capacitor (28).

## Patentansprüche

1. Bürstenloser Wechselstrom-Elektromotor, der mit einer Stromquelle verbunden ist und einen elektromechanischen Wandler (1) mit einer Spule mit drei Abschnitten (2,3,4) und einem Dauennagnetinduktor, einen Wechselrichter (6), eine Steuerungseinheit (7) und drei Komparatoren (8, 9, 10) umfasst, wobei die Anschlüsse der Spulenabschnitte des elektromechanischen Wandlers jeweils mit dem 1., 2. und 3. Ausgang des Wechselrichters (6) und mit den ersten Eingängen der Komparatoren (8, 9, 10) verbunden sind,
**dadurch gekennzeichnet, dass**
der Motor zusätzlich eine Elektromotor-Anlaufeinheit (11) umfasst, wobei die Steuerungseinheit sechs Opto-Sender (12, 13, 14, 15, 16, 17) mit optischen Ausgängen umfasst, während der Wechselrichter sechs Opto-Empfänger (18, 19, 20, 21, 22, 23) umfasst, wobei die optischen Eingänge der Empfänger durch optische Kopplung mit entsprechenden optischen Ausgängen der Opto-Sender (12, 13, 14, 15, 16, 17) der Steuerungseinheit (7) verbunden sind und wobei die Ausgänge der Komparatoren (8, 9, 10) jeweils mit dem 1., 2. und 3. Eingang der Steuerungseinheit (7) verbunden sind, während der 7. Stromeingang des Wechselrichters (6) mit der Stromquelle und mit dem Eingang der Elektromotor-Alllaufeinheit (11) verbunden ist, der 1. Ausgang der Anlaufeinheit (11) mit dem 3. Eingang des Komparators (9) verbunden ist, deren 2. Ausgang mit dem 3. Eingang des Komparator (10) verbunden ist und wobei die 2. Eingänge aller Komparatoren (8, 9, 10) miteinander verbunden sind,
wobei die Anlaufeinheit (11) einen bipolaren Transistor (25), einen Kondensator (28) und eine Diode (27) umfasst und der 1. Ausgang der Anlaufeinheit (11) durch die gesperrte Diode (27) vom Komparator (9) getrennt wird und am 2. Ausgang der Anlaufeinheit (11) anhand des Transistors (25) und des Kondensators (28) ein Startimpuls gebildet wird.

## Revendications

1. Un moteur électrique CA sans balais qui est connecté à une source d'alimentation et comprend un convertisseur (1) électromécanique avec un enroulement en trois sections (2, 3, 4) et un inducteur à aimant permanent, un onduleur (6), une unité de contrôle (7) et trois comparateurs (8, 9, 10), les bornes des sections de l'enroulement dudit convertisseur électromécanique étant connectées aux 1^{ère}, 2^{ème} et 3^{ème} sorties de l'onduleur (6), respectivement, et aux 1^{ères} sorties des comparateurs (8, 9, 10), respectivement, **caractérisé en ce que**
ledit moteur comprend en outre une unité de démarrage électrique (11), ladite unité de contrôle comprenant six émetteurs optocoupleurs (12, 13, 14, 15, 16, 17) avec sorties optiques, tandis que l'onduleur (6) comprend six receveurs optocoupleurs (18, 19, 20, 21, 22, 23), les sorties optiques des susdits receveurs étant connectées au moyen d'un couplage optique aux sorties optiques correspondantes des susdits émetteurs optocoupleurs (12, 13, 14, 15, 16, 17) de l'unité de contrôle (7), et les sorties des comparateurs (8, 9, 10) étant connectées aux 1^{ère}, 2^{ème} et 3^{ème} sorties de l'unité de contrôle (7), respectivement, tandis que la 7^{ème} sortie de l'onduleur (6) est connectée à la source d'alimentation électrique et à l'entrée de l'unité de démarrage du moteur électrique (11), la 1^{ère} sortie de la susdite unité de démarrage (11) étant connectée à la 3^{ème} sortie du comparateur (9), sa 2^{ème} sortie étant connectée à la 3^{ème} sortie du comparateur (10), et les 2^{ème} sorties de tous les comparateurs (8, 9, 10) étant interconnectées entre elles,
l'unité de démarrage (11) comprenant un transistor bipolaire (25), un condensateur (28) et une diode (27), et la 1^{ère} sortie de l'unité de démarrage (11) devenant déconnectée du comparateur (9) en raison de la diode bloquée (27), et une impulsion de démarrage étant formée à la 2^{ème} sortie de l'unité de démarrage (11) au moyen du transistor (25) et du condensateur (28).
